# EUROPEAN PATENT APPLICATION

(11) **EP 3 936 467 A1**
(43) Date of publication of application: **12.01.2022**
(21) Application number: 20184919.7
(22) Date of filing: 09.07.2020
(51) Int. Cl.: B65G 59/10, B64F 1/36

(54) **TRAY RETURN MODULE FOR AN INSPECTION FACILITY, AND INSPECTION FACILITY COMPRISING AT LEAST ONE SUCH MODULE**

(71) Applicant: Selfcair UK Ltd, Peterborough PE1 5XN (GB)
(72) Inventor: DOWE, Andy, Kings Lynn, Norfolk PE34 4RG (GB)
(74) Representative: Gauchet, Fabien Roland

(57) **Abstract**

The invention relates to a tray return module (19) for an inspection facility extending between a public area (P) for deposit (1) of personal belongings of travelers and a secure area (S) for recovery (5) of these belongings, this module (19) comprising an opening (21) for receiving said trays (2), means (23) for returning said trays (2) towards said deposit zone (1), and means for transferring said (2) trays from said opening (21) to said return means (23), wherein said transfer means comprise a plurality of transfer rollers (27a, 27b, 27c, 27d) with helical thread (39) capable of engaging with the edges (17) of said trays (2) and arranged between said receiving opening (21) and said return means (23).

## Description

The present invention relates to inspection of personal belongings of persons who want to reach a restricted access area.

This invention relates particularly, but not only, to security inspection facilities used in airports for inspecting travelers' luggage with X-ray scanning machines.

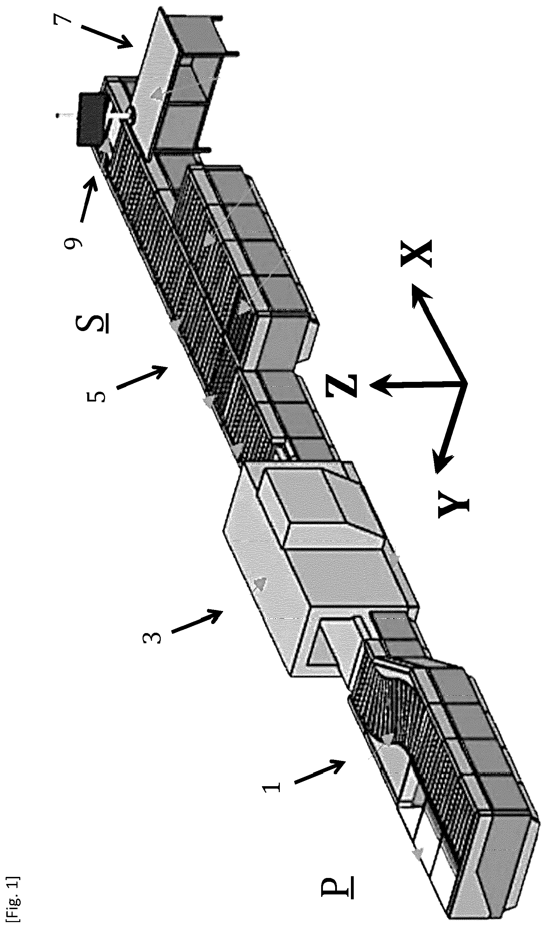

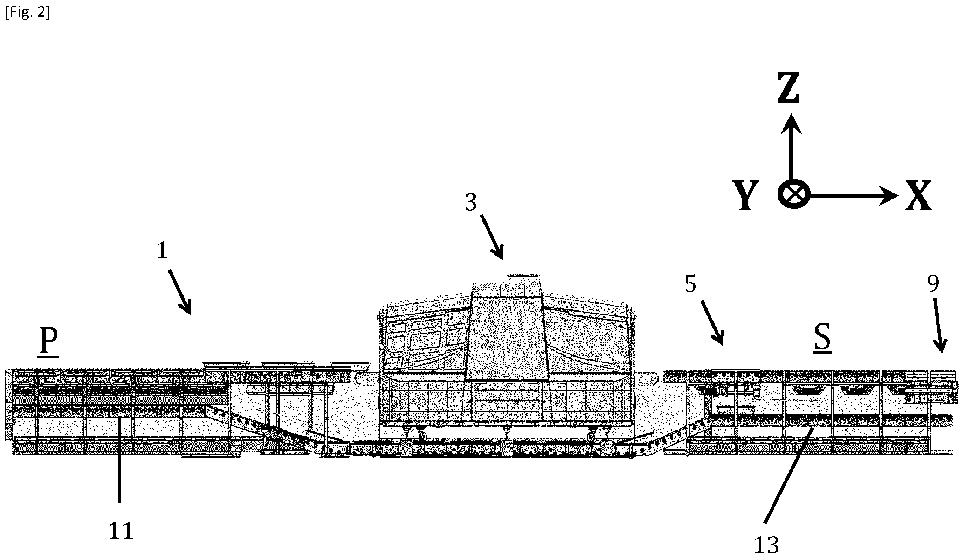

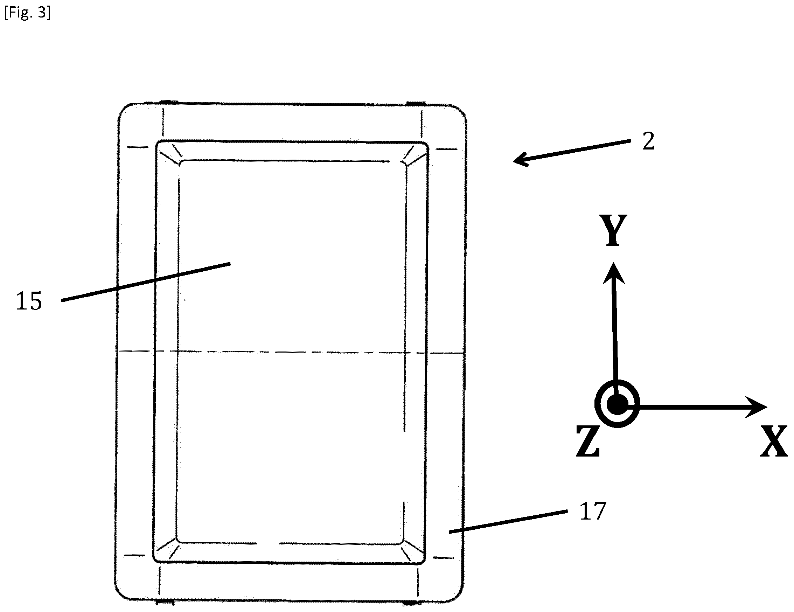

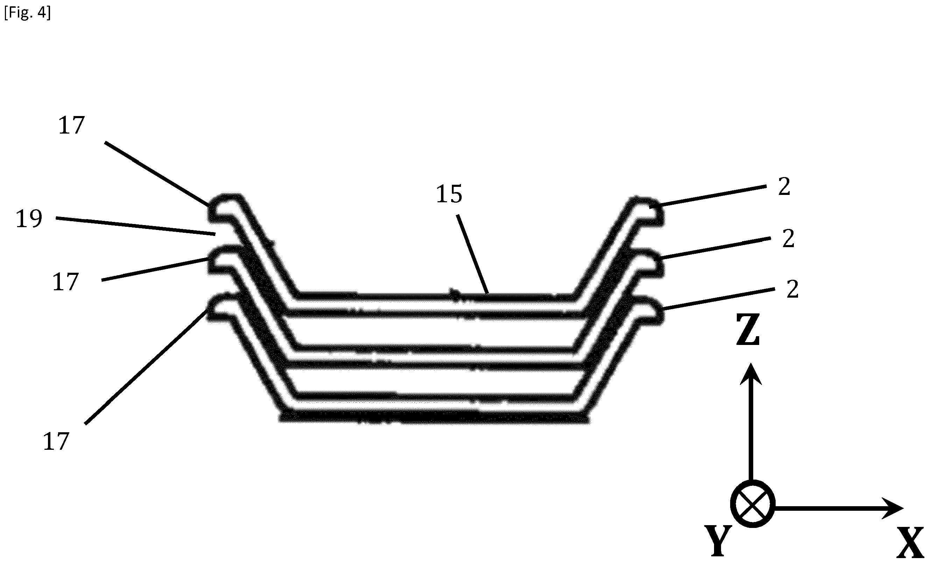

As is known *per se,* and visible in figures 1 and 2, such an inspection facility, extending between a public area P and a secure area S, typically includes:
- a receiving station 1 for receiving travelers' belongings which are placed into trays 2 as shown in figures 3 and 4,
- an X-ray or CT (computerized thomography) or any future scanning machine for inspecting travelers' belongings,
- a station 5 for recovery of travelers' personal belongings,
- an optional station 7 for further inspection of suspicious luggage, and
- a station 9 located at the end of the facility, for sending trays 2 back to the receiving station 1.

Running of trays 2 from the public area P to the secure area S is provided by upper conveying means Hand can include powered rollers or belt conveyors.

Returning of trays 2 from the secure area S to the public area P is provided by lower conveying means 13 arranged below the upper conveying means 11.

The present invention aims at providing means for transferring the trays 2 from the upper conveying means 11 to the lower conveying means 13 at the extremity of the facility located in the secure area S, *i.e.* in the return station 9.

This aim of the invention is achieved with a tray return module for an inspection facility extending between a public area for deposit of travelers' belongings and a secure area for recovery of these belongings, this module comprising an opening for receiving said trays, means for returning said trays towards said deposit zone, and means for transferring the trays from said opening to said return means, wherein said transfer means comprise a plurality of transfer rollers with helical thread capable of engaging with the edges of said trays and arranged between said receiving opening and said return means.

Owing to these features, there is provided a simple and easy-to-maintain elevator module for the trays, for conducting these trays from their circulation stage from the public area to the secure zone, to their return stage from the secure area to the public area.

According to other optional features of the present invention, taken alone in combination:
- said return means are provided under said opening and four transfer rollers with helical thread and with substantially vertical axis are arranged at the periphery of said opening: this arrangement corresponds to a conventional arrangement of an inspection facility, in which the conveying means for circulating the trays from the public area to the secure area are located above the conveying means for returning said trays to the public area;
- said transfer rollers extend to said return means, and have a thread having a pitch gradually increasing from said opening to said return means: this arrangement is particularly suited to the situation where the trays have a relatively large depth; increasing the pitch of the thread of the transfer rollers allows to limit the number of rotations of these rollers to transfer the trays from the receiving opening of the module to the returning means of these trays to the public area;
- the pitch of said thread is adapted to ensure the transfer of said trays from said opening to said return means with a rotation of said rollers of at most 2.5 turns: the limited number of revolutions of the transfer rollers is compatible with a fast return of the trays from the secure area to the public area;
- the module includes at least one motor for driving at least one of said transfer rollers, and means for transmitting this rotational movement to the other transfer rollers: with this arrangement, a limited number of preferably electrical motors, is sufficient to drive all transfer rollers. Transmission of movement between rollers can be provided by gearboxes, shafts and couplings, or by timing belts and pullies;
- the module includes means for detecting presence of said trays;
- said return means comprise a plurality of return rollers with substantially horizontal axes: these return rollers, at least one of which is preferably driven, form a part of the lower conveying means for returning the trays to the public area of the facility.

The present invention also relates to an inspection facility arranged between a public area for depositing personal belongings of travelers in trays, and a secure area for recovering these belongings, comprising at least one tray return module according to the above.

Owing to these features, such a facility may benefit from the advantages of simple design and maintenance of the aforesaid module.

A module according to the invention can readily replace a module of the prior art located at the end of an existing inspection facility.

Other features and advantages of the invention will appear on reading the description which follows, with reference to the accompanying drawings, which illustrate:
[Fig. 1]: a perspective view of an inspection facility such as mentioned in the introduction to the present specification;
[Fig. 2]: a side view of this facility;
[Fig. 3]: a top view of a tray for receiving personal belongings of a traveler;
[Fig. 4]: a section of a stack of three trays;
[Fig. 5]: a perspective view of a first embodiment of a tray return module according to the invention;
[Fig. 6]: a perspective view of the mechanism located within this module;
[Fig. 7]: a perspective view of the mechanism of a second embodiment of a tray return module according to the invention;
[Fig. 8]: a front view of this mechanism;
[Fig. 9]: a top view of this mechanism;
[Fig. 10]: a side view of this mechanism;
[Fig. 11]: a side view of a transfer roller of this mechanism;
[Fig. 12]: a section of the transfer roller; and
[Fig. 13]: a side view in perspective of a variant of the mechanism of this second embodiment.

For more clarity, identical or similar items are denoted by same or similar reference signs on the figures.

Furthermore, and to facilitate orientation in space, XYZ marks have been represented on all the figures, the directions X, Y, Z respectively indicating:
- X: the longitudinal direction of the facility according to the invention, i.e. the general direction of circulation of the trays with travelers' belongings;
- Y: the transverse direction of the facility according to the invention, i.e. the horizontal direction perpendicular to the X direction, and:
- Z: the vertical direction, perpendicular to the X and Y directions.

Words "horizontal" and "vertical" shall be understood with their usual meaning.

Focus is now put on station 9 for returning the trays at the end of the inspection facility: this station 9 includes the tray return module according to the invention.

As shown in figures 3 and 4, each tray 2 presents a generally parallelepiped shape, and comprises a loading area 15 of substantially trapezoidal shape, surmounted by a flange 17.

The loading zone 15 is for receiving the personal belongings (clothing, cabine baggage, keys, portable phone, computer, etc.) of travelers who want to go from the public area P to the secure area S.

As visible in figure 4, the trapezoid shape of the loading area 15 of each tray 2 allows stacking said trays, the flanges 17 of said trays overlapping each other with a space 19 between them.

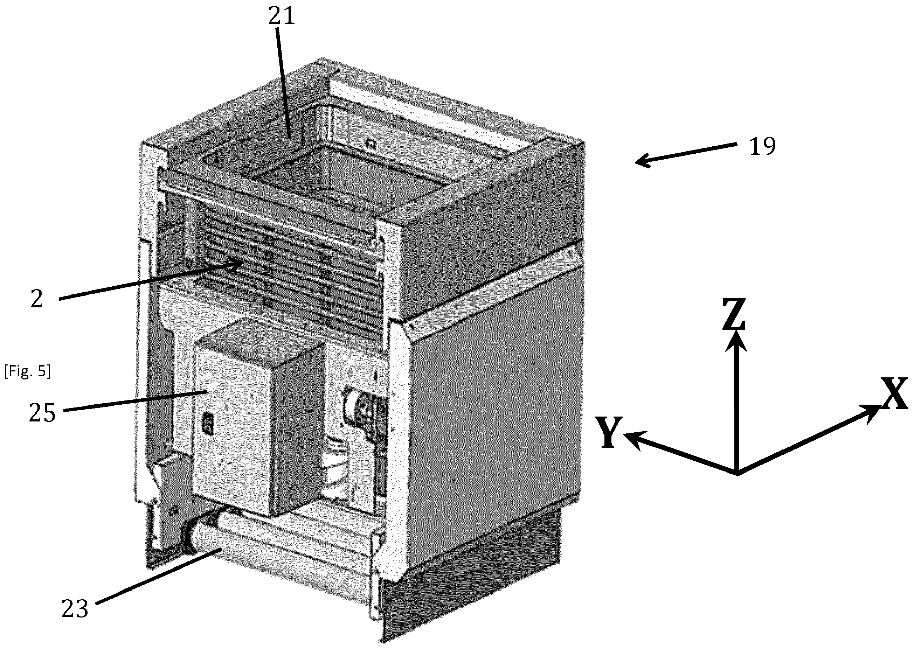

Reference is made now to figure 5, which represents a first embodiment of a return module 19 according to the invention, the return module being designed to be installed at the end of the facility located in the secure area S, *i.e.* at the return station 9.

As is visible in figure 5, this return module 19, of generally parallelepiped shape, comprises, on its upper face, an opening 21 for receiving the trays 2.

In its lower part, i.e. located beneath the trays 2 and underneath the opening 21, the return module comprises return means formed in this case by a plurality of return rollers 23, at least one of which motorized.

The return module 19 further comprises a control box 25, including various electrical and electronic appliances.

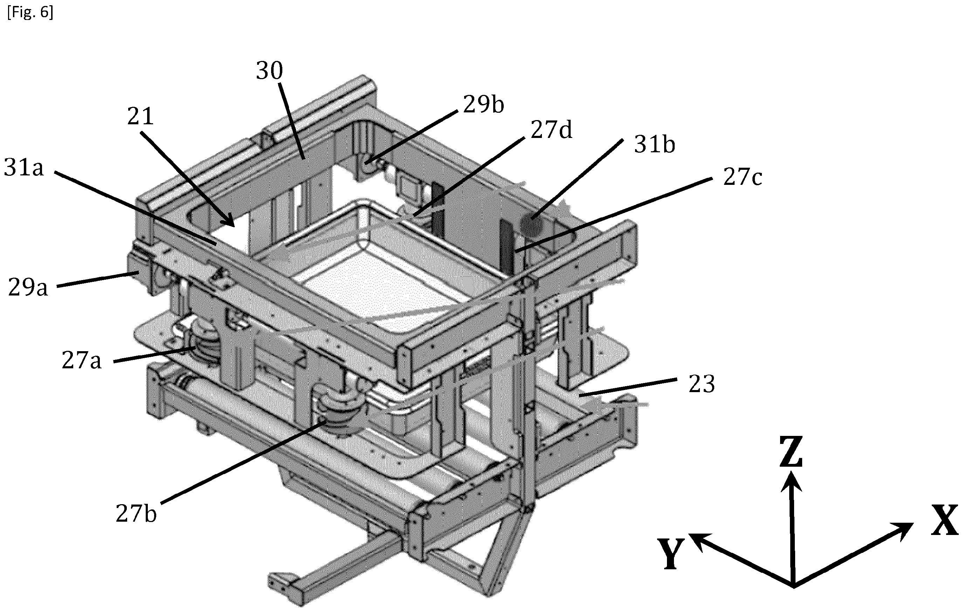

Referring now to figure 6, it can be seen the mechanism within the return module 19.

This mechanism comprises four transfer rollers 27a, 27b, 27c, 27, disposed peripherally and below the opening 21 for receiving trays 2.

The transfer rollers 27a, 27b, 27c, 27d are rotatably mounted about vertical axes, two of them 27a, 27d being driven by electric motors 29a, 29b, the two other transfer rollers 27b, 27c being themselves driven respectively by suitable transmission means by the transfer rollers 27a, 27a.

In this first embodiment, suitable for trays 2 whose loading zones 15 are relatively shallow, the transfer rollers 27a, 27b, 27c, 27d do not extend to the return rollers 23.

These transfer rollers 27a, 27b, 27c, 27d each comprise at their periphery a helical thread, the pitch of which substantially corresponds to the distance between the edges 17 between two trays 2 stacked on each other (see figure 4).

Moreover, mounted at the periphery of the structure 30 defining the receiving opening 21 are sensors 31a, 31b for detecting the presence of at least one tray 2.

The operation mode and the advantages of the module 19 for returning trays 2 which has just been described result directly from the foregoing.

A traveler that wishes to go from the public area P to the secure area S (see figures 1 and 2), deposits personal belongings within at least one tray 2, at receiving station 1.

The tray 2 then goes through the scanning machine 3, where it is X-ray inspected by a dedicated operator.

In exiting the scanning machine 3, the tray 2 next arrives at the recovery station 5, where the traveler can recover personal belongings.

Apart from particular situations in which certain baggage need to be further inspected in inspection zone 7, the tray 2 of the traveler is sent directly to the return station 9, and falls in the receiving opening 21 of the return module 19 according to the invention (figures 5 and 6).

The sensors 31a, 31b, detecting the presence of the tray 2, send a presence signal to the box 25, which then triggers rotation of the transfer rollers 27a, 27b, 27c, 27a, which by their thread adapted to the distance between the flanges 17 of stacked trays 2, enable to descend the trays by groups of two or three (depending on the length of the transfer rollers) from the receiving opening 21 to the return rollers 23.

The trays 2 can then return, by stacked groups of two or three for instance, to the public area P, by running on the downstream conveyor means 13 (see figure 2), passing under the scanning machine 3.

As can be understood, the transfer rollers 27a, 27b, 27c, 27d allow, very simply, with a very limited number of rotations, typically of most 2.5 revolutions for each transfer of group of two or three trays 2, to lower the trays from the upper conveying means 11 to the downstream conveying means 13.

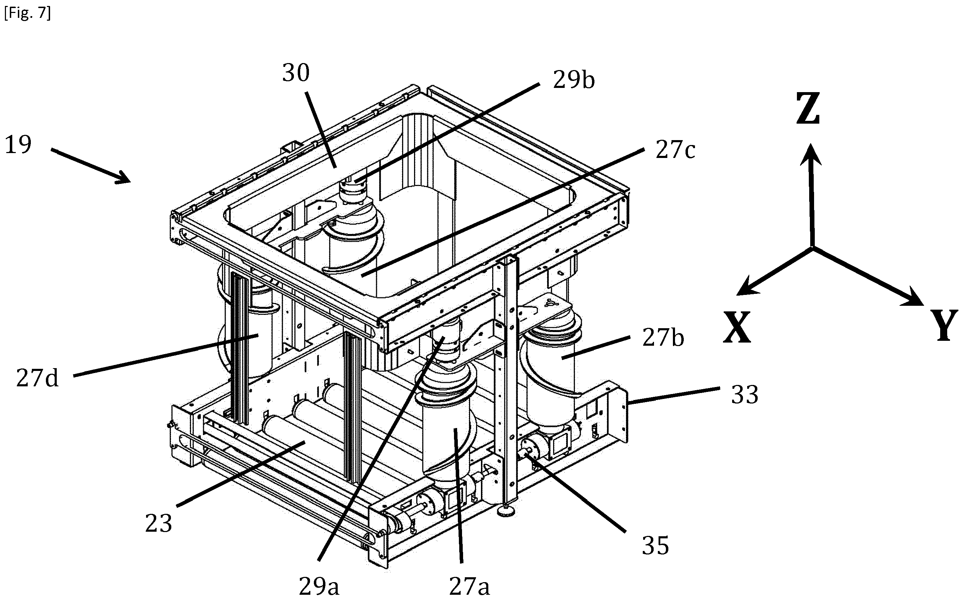

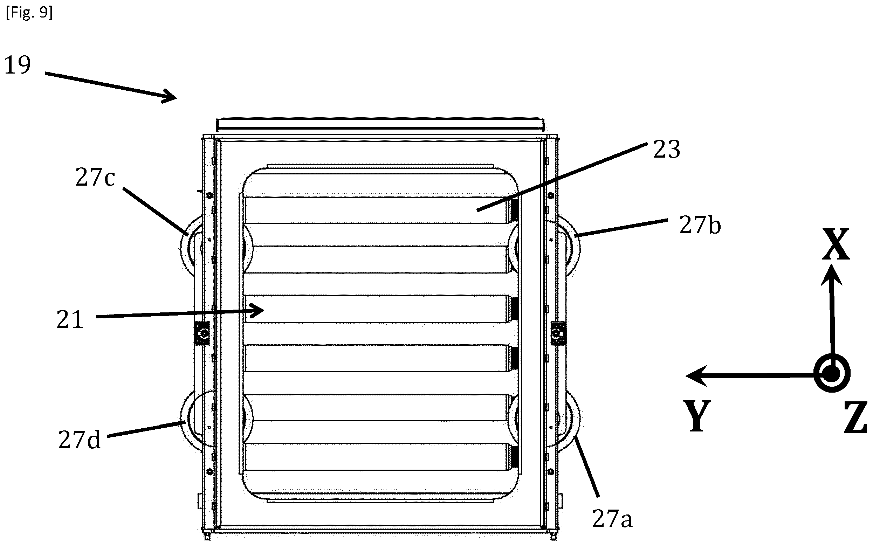

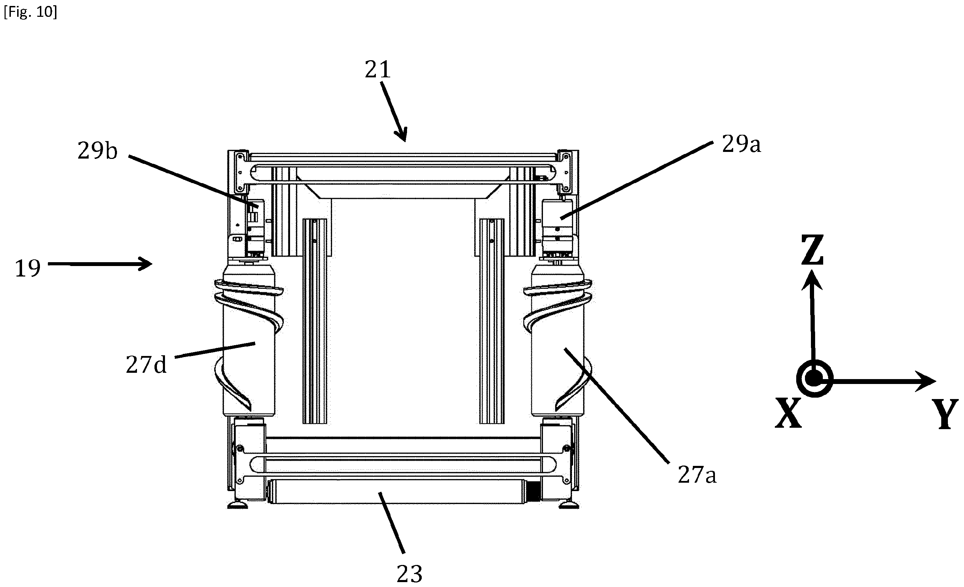

Referring now to figures 7 to 10, one can see another embodiment of a return module 19 according to the invention, more particularly adapted to cases where the trays 2 include a loading zone 15 of greater depth.

In this particular case, the transfer rollers 27a, 27b, 27c, 27d extend over the entire height of the module 19, i.e. they are mounted on axes which extend vertically from the structure 30 defining the receiving opening 21 of the module 19, to the frame 33 on which are mounted the return rollers 23.

These transfer rollers are cinematically coupled in pairs 27a, 27b and 27c, 27a, by mechanical transmission means of the type comprising shafts + pinions 35.

Two such transfer rollers 27a, 27c are respectively driven by electric motors 29a, 29b.

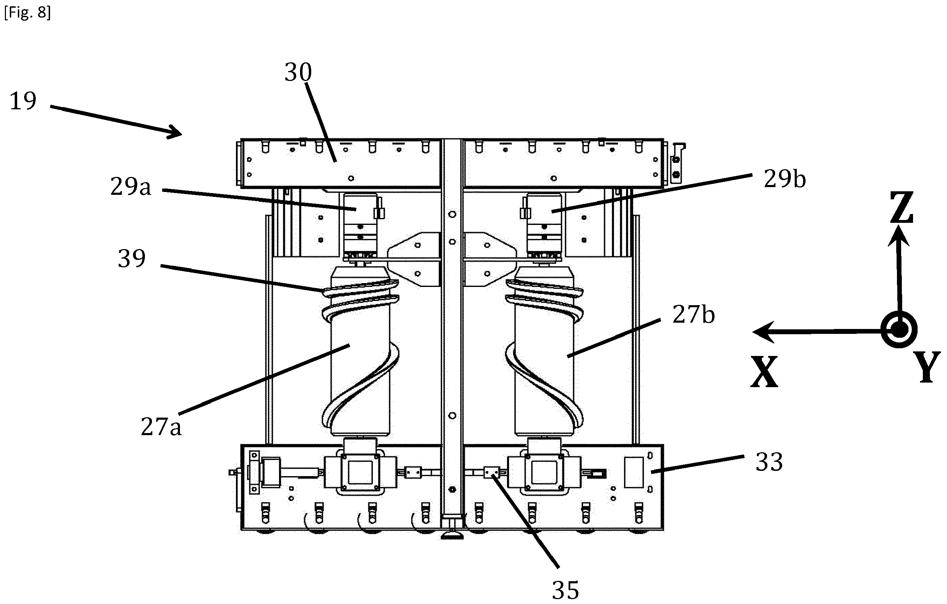

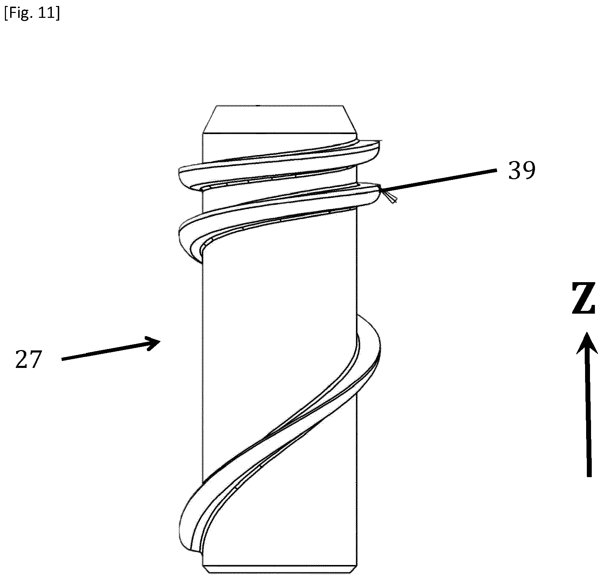

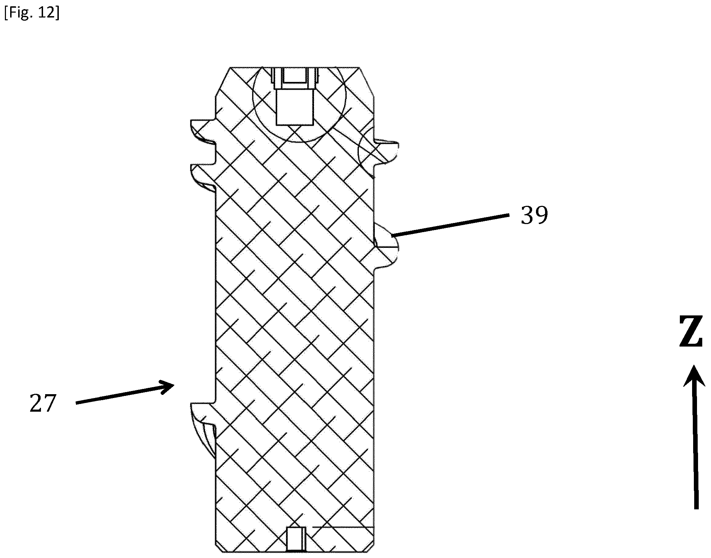

As can be seen in particular in figures 8, 10, 11 and 12, each transfer roller 27a, 27b, 27c, 27a, comprises at its periphery a thread 39 whose pitch, i.e. whose distance between two respective threads along the generatrix of the cylinder defining the roller, progressively grows larger from top to bottom of the transfer roller, i.e. from the receiving area 21 towards the return rollers 23.

This increase of the thread pitch allows for separating the trays 2 from each other, despite the substantial depth of their loading area 15.

This increase of the pitch may also achieve this separation with a minimum number of turns of each transfer roller 27a, 27b, 27c, 27a.

It may be noted that to correctly implement the separation of great depth trays 2 from each other, it is necessary that the transfer rollers extend over the entire height of the space between the receiving opening 21 and the return rollers 23.

In the case of great depth trays, these are returned one by one, and no longer by groups, by the downstream conveyor unit 13, to the public area P.

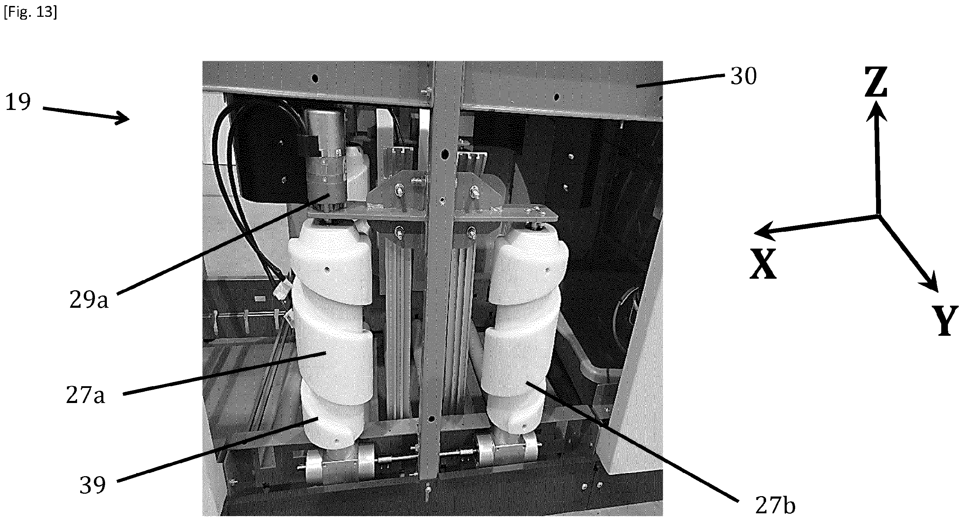

In the variant of this second embodiment shown in figure 13, the transfer rollers 27a, 27b, 27c, 27d have threads in negative relative to the embodiment of figures 7 to 12, i.e. recessed rather than in relief, providing additional resistance to these threads.

As can be understood in the light of the foregoing, the return module 19 for trays 2 according to the invention ensures, with a simple design and with ease of maintenance, the vertical transfer of these trays from the upper conveying means 11 to the downstream conveying means 13, in a facility for inspecting personal belongings of travelers.

This module 19 can be coupled to existing inspection facilities and electrically and mechanically connected thereto in accordance with the teachings of the French patent application FR3048679.

Naturally, the invention is described in the foregoing as an example. It is understood that those skilled in the art are able to perform different alternative embodiments of the invention without thereby departing from the scope of the invention.

## Claims

1. Tray return module (19) for an inspection facility extending between a public area (P) for deposit (1) of travelers' belongings and a secure area (S) for recovery (5) of these belongings, this module (19) comprising an opening (21) for receiving said trays (2), means (23) for returning said trays (2) towards said deposit zone (1), and means for transferring said (2) trays from said opening (21) to said return means (23), wherein said transfer means comprise a plurality of transfer rollers (27a, 27b, 27c, 27d) with helical thread (39) capable of engaging with the edges (17) of said trays (2) and arranged between said receiving opening (21) and said return means (23).

2. Return module (19) according to claim 1, in which said return means (23) are provided under said opening (21) and four transfer rollers (27a, 27b, 27c, 27d) with helical thread and with substantially vertical axis are arranged at the periphery of said opening (21).

3. Return module (19) according to claim 2, in which said transfer rollers (27a, 27b, 27c, 27d) extend to said return means, and have a thread (39) having a pitch gradually increasing from said opening (21) to said return means (23).

4. Return module (19) according to one of claims 2 or 3, in which the pitch of said thread (39) is adapted to ensure the transfer of said trays (2) from said opening (21) to said return means (23) with a rotation of said transfer rollers (27a, 27b, 27c, 27d) of at most 2.5 turns.

5. Return module (19) according to any of the preceding claims, comprising at least one (29a, 29b) motor for driving at least one of said transfer rollers (27a, 27d or 27a,27c), and transmission means (35) of this rotational movement to the other transfer rollers.

6. Return module (19) according to any of the preceding claims, comprising means (31a, 31b) for detecting presence of said trays (2).

7. Return module (19) according to any of the preceding claims, in which said return means comprise a plurality of return rollers (23) with substantially horizontal axes.

8. Inspection facility arranged between a public area (P) for depositing (1) personal belongings of travelers in trays, and a secure area (S) for recovering these belongings (5), comprising at least one tray return module (19) according to any one of the preceding claims.
